# EUROPEAN PATENT APPLICATION

(11) **EP 2 674 291 A1**
(43) Date of publication of application: **18.12.2013**
(21) Application number: 12707902.8
(22) Date of filing: 06.02.2012
(51) Int. Cl.: B32B 1/08, B32B 27/20, B32B 27/34, F16L 11/04, F16L 11/11

(54) **TUBE**

(30) Priority: 07.02.2011 IT MI20110178; 05.05.2011 ES 201130718 P
(71) Applicant: Industrie Ilpea S.p.A., 21020 Malgesso, Varese (IT)
(72) Inventor: LASIERRA TOLDRA, Antoni, ES-08213 BARCELONA (ES); VILA GARDELLA, José, ES-08213 BARCELONA (ES); DE GIORGI, Marco, I-21020 MALGESSO (VARESE) (IT)
(74) Representative: Durán-Corretjer, S.L.P.
(86) International application number: PCT/IB2012/000203
(87) International publication number: WO 2012/107819

(57) **Abstract**

Pipe comprising at least two concentric layers in which the outermost or first layer is made of PA612 or a composition containing PA612 and a second layer is made of PA6, PA66, copolymer PA6/66 or a composition containing said compound.

## Description

The present invention relates to a pipe.

More particularly, the present invention relates to a pipe with improved characteristics for applications in the motor industry, more particularly for brake booster vacuum lines in the automotive field and fuel and combustion gas lines, although the invention is not necessarily limited to said applications.

Brake booster vacuum lines are manufactured according to the prior art using an engineering plastic, such as PA12 (Polyamide 12; CAS (Chemical Abstracts Service) nomenclature poly[imino(1-oxo-1,12-dodecanediyl)]), PA 612 (Polyamide 6,12; CAS nomenclature poly[imino-1,6-hexanediylimino(1,12-dioxo-1,12-dodecanediyl)]) and TEEE (Thermoplastic Elastomer-Ether-Ester) since said materials have characteristics such as:
a) high chemical resistance to oils and other agents present in the engine region,
b) high flexibility to absorb vibrations from the engine body,
c) resistance to high-temperature ageing, and
d) resistance to high-temperature collapse.

This type of composition, or compositions of other polyamide resins, may contain different types of additives such as pigments, for example carbon black, antioxidant and antiozonant stabilisers, plasticisers, impact modifiers, process adjuvants, and combinations thereof.

Although said materials fulfil their function in a way that could be described as adequate, it would be desirable to have pipes with improved characteristics. In addition, excessive demand for one of the above-mentioned plastics materials leads readily to restrictions in global availability with the accompanying price fluctuations of said materials, which casts doubt on their technical and economic viability in some applications. PA12, in particular, has a relatively low standard melting point (173±3 °C) which is a drawback since, apart from the evident temperature limitation, it requires larger and more careful dimensioning of the pipes and supports to avoid structural collapse at temperatures close to the standard melting point. PA612, for its part, is more expensive, less widely available and has inferior mechanical and thermomechanical properties, which means that pipes made of this material sometimes require metal reinforcements. For its part, TEEE has very poor performance in mechanically stressed zones coming in contact with ozone, even if hardening takes place after the components have been introduced. Accordingly, some manufacturers have banned the use of TEEE for brake applications.

An object of the present invention is to disclose a novel material for producing pipes for vacuum lines that ensures that sector requirements are met for this type of pipe (such as the technical standards of motor manufacturers, for example) and that is an improvement from the mechanical, thermal, commercial availability and economic point of view.

According to the present invention, said object can be achieved by means of a pipe which comprises at least two concentric layers, in which the outermost or first layer is made of PA612, and a second layer made of PA6, PA66, or PA 6/66.

PA6 is a polyamide resin with a melting point of 219±3 °C.

PA66 is a polyamide resin with a melting point of 260±3 °C.

PA6/66 (for example in the proportion 20/80) is a polyamide resin with a melting point of 250 °C ±3 °C.

PA6, PA66 and PA6/66 are characterised by good heat resistance, good mechanical properties and a lower cost than PA612.

Surprisingly, in tests carried out and for the application according to the invention, significantly better results were obtained with PA6, which is the resin with the lowest melting point of the three.

PA6 is also known by the CAS name poly[imino(1-oxo-1,6-hexanediyl)].

In a particularly preferred manner, the second inner layer immediately adjacent to the first layer is made of PA6.

In the tests carried out, PA612 and PA6 in this adjacent configuration and for the application stated are chemically compatible in terms of bonding. This makes possible the extrusion of the pipe from a two-layer extrusion head system, instead of using an extrusion system with more layers due to the use of the adhesives that would be necessary were the materials not compatible, which would add no value to the pipe characteristics but would increase the difficulty and cost of the extrusion process.

The layer of PA612 used as the outermost layer of the pipe is the same as one of the materials currently used for producing these pipes and has the function of protecting the PA6 layer against chemical agents present in the engine region against which the resistance of PA6 can clearly be improved. PA6 is not currently used for this type of application because of its lack of chemical resistance, enabling the outer layer of PA612 to be used advantageously in this application as regards its thermal and mechanical characteristics and the final price. The thickness of the outer layer is, preferably, the lowest that can be produced technically while providing the required chemical resistance, since the other characteristics of PA6 (thermal, mechanical, commercial availability and economic) are superior.

Accordingly, a particularly advantageous embodiment of the present invention is a two-layer pipe in which the inner layer is PA6 and the outer layer is PA612.

The present invention also provides for a preferred embodiment consisting of a pipe comprising at least four concentric layers, the outermost or first layer of the pipe being a layer of PA612, and the inner layer immediately adjacent thereto, or second layer, being a layer of PA6, the third layer, immediately adjacent to said second layer of PA6 being a layer of PA612, and the fourth or innermost layer immediately adjacent to the third layer of PA612, being a layer of PA12. More preferably, said layer of PA12 is the innermost layer of the pipe.

This embodiment is suitable when there is a wish to improve the chemical resistance of the pipe. In particular, the layer of PA12 (a material currently used for brake booster pipes) provides better chemical resistance than PA6 to the gases passing inside said pipe, produced by combustion. In this four-layer configuration, the layer of PA6.12 is also used as an adhesive between the PA6 and PA12, as these compounds are not chemically compatible. In addition, PA6.12 has suitable mechanical, thermal and chemical characteristics and the pipe can be produced by extrusion.

It would also be possible according to the invention to use a pipe with only three layers, omitting the innermost layer of PA12, as PA6.12 is also resistant to combustion gases although it does not have the same level of performance and stability as PA12.

The present invention also provides for multi-layer embodiments in which the intermediate layers are situated between the first and second layer (in which case, it will preferably be the innermost layer of the pipe). Said material may be a material that is compatible with the first and second layer which provides improved mechanical resistance or barrier effect properties to the pipe walls. Said intermediate layer may be PA66, according to the present invention.

The present invention also provides, advantageously, for the second layer of PA6 to be at least 0.4mm thick. For example, the thickness may be between 0.45±0.05mm and 0.7±0.05mm. More preferably, to obtain better mechanical properties, the thickness will be at least 0.65mm. Also preferably, the thickness of the pipe wall will be at least 1 mm.

The pipes according to the present invention are particularly suitable for use in brake booster vacuum pipe applications, although the invention is not necessarily limited to said use. In particular, two-, three- and four-layer embodiments are particularly suitable for fuel and for the transport of combustion gases.

To form each layer of a pipe according to the present invention, a polyamide resin composition may also comprise various types of additive such as pigments (for example, carbon black), stabilisers, antioxidants and antiozonants, plasticisers, impact modifiers, process adjuvants, mineral loads and glass fibre.

For a better understanding of the invention, the accompanying drawings show an embodiment of the present invention as an explanatory but not limiting example.
Fig. 1 shows a cross-section of a first embodiment of a pipe according to the present invention.
Fig. 2 shows a cross-section of a second embodiment of a pipe according to the present invention.
Fig. 3 shows a cross-section of a third embodiment of a pipe according to the present invention.
Fig. 4 shows a cross-section of a fourth embodiment of a pipe according to the present invention.

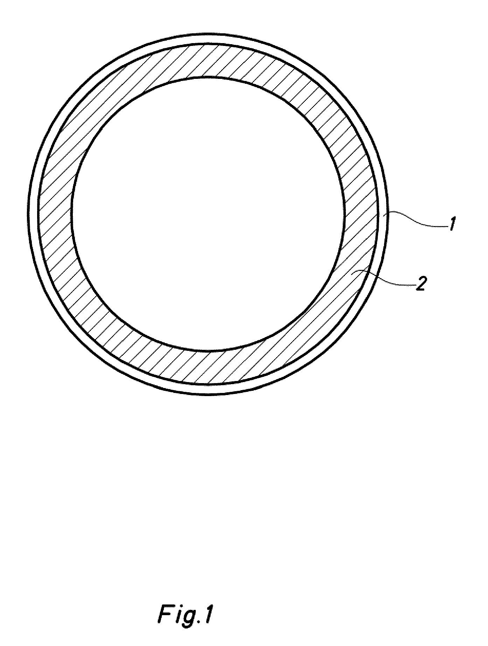

Fig. 1 shows the cross-section of a two-layer pipe. The pipe can be used for a vehicle brake booster circuit and was obtained by co-extrusion. The first, outermost layer 1 was made of PA6.12. In particular, in the example the material used had the trade name Evonik Vestamid EX9350 and was supplied by Evonik Degussa GmbH. The second inner layer 2 adjacent to the first outer layer 1 was made of PA6. In particular, in the example the material used had the trade name UBE Nylon 1024JI and was supplied by UBE Engineering Plastics. In the example shown, there is no adhesive between the layers.

According to the studies carried out, the best combination of properties for the two-layer pipe for brake booster applications is achieved when the outermost layer 1 is between 20 % and 40 % of the total thickness of the pipe, and the innermost layer 2 represents the remaining 80-60 %. In particular, smooth pipes with external diameters of 8mm and 10mm were produced by extrusion, in both cases with a wall thickness of 1 mm. The nominal thicknesses were 0.3±0.05mm for the outer layer 1 and 0.7±0.05mm for the inner layer. Pipes were also produced with a thickness of 0.25±0.05mm for the outer layer and 0.75±0.05mm for the inner layer. In the last case, the PA6.12 supplied was stabilised against heat and environmental ageing and modified with anti-impact agents and the PA6 supplied was plasticised and modified with anti-impact agents.

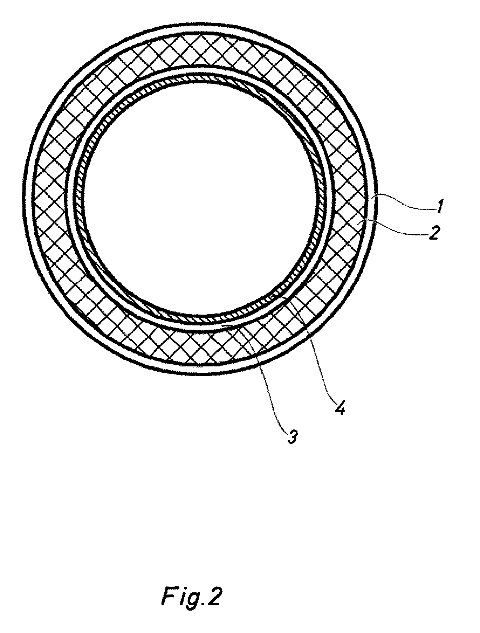

Fig. 2 shows a second embodiment of a four-layer pipe obtained by extrusion. There are no adhesives between the layers. The two outermost layers 1, 2 are made of the same materials as the pipe in the example in Fig. 1. Immediately adjacent to the second layer 2 there is a third layer 3 of PA6.12, the same material as in the first, outermost layer 1. Immediately adjacent to the third layer 3 is a fourth and innermost layer 4, made of PA12. In particular, for this example the material with the trade name UBE Ubesta 3030 JLX1 was used.

According to the studies carried out, the best combination of properties for the four-layer pipe for use in brake booster applications is obtained when the first, outermost layer 1 is between 15 % and 35 % of the pipe thickness, the second layer 2 between 40 % and 60 % of the pipe thickness, the third layer 3 between 10 % and 20 % of the pipe thickness and the fourth layer between 10 % and 20 % of the total pipe thickness. An optimum wall thickness for this application may be 1 mm and the typical thickness dimensional tolerance that can be obtained by the extrusion process is ±0.05mm. In the particular case shown, pipes with nominal diameters of 8mm and 10mm were produced, with layer thicknesses of 0.25±0.05mm for the first layer 1, 0.45±0.05mm for the second layer 2, and 0.15±0.05mm for each of the third and fourth layers 3 and 4 respectively.

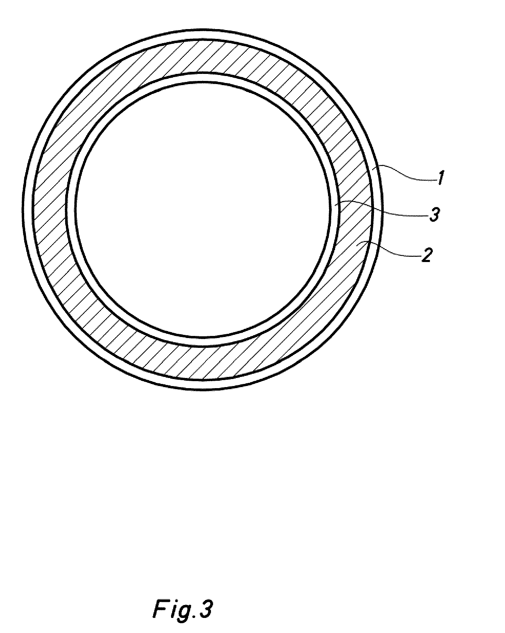

Fig. 3 shows a third embodiment of a three-layer pipe obtained by extrusion. There are no adhesives between the layers. The layers 1, 2 and 3 are made of identical materials to those used in the layers with the same reference numeral in the example in Fig. 2.

According to the studies carried out, the best combination of properties for the three-layer pipe of Fig. 3 for use in brake booster applications is obtained when the first, outermost layer 1 is between 20 % and 40 % of the pipe thickness, the second layer 2 between 40 % and 60 % of the pipe thickness and the third, innermost layer 3 between 15 % and 25 % of the pipe thickness. In the particular case shown, pipes were produced with nominal diameters of 8mm and 10mm, with layer thicknesses of 0.25±0.05mm for the first layer 1, 0.55±0.05mm for the second layer 2, and 0.20±0.05mm for the third layer 3.

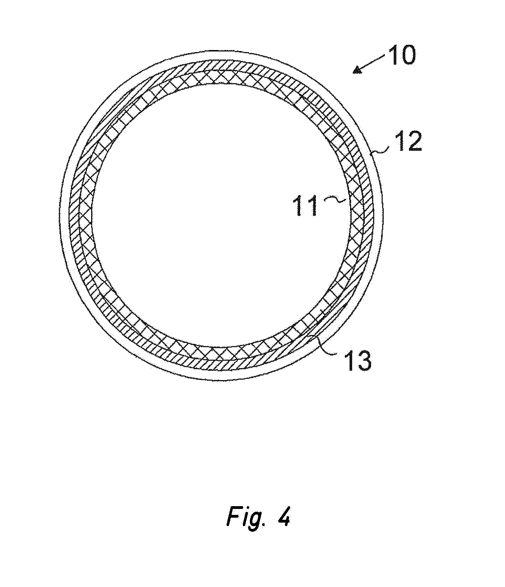

Fig. 4 shows a fourth embodiment of a three-layer pipe 10 with a second or inner layer 11, a first or outer layer 12 and an intermediate layer 13, for a vehicle brake booster vacuum circuit. The pipe 10 was produced by co-extrusion of the following polyamide resin-based composition:
- an outer layer 12 of Vestamid EX9350 from Evonik Degussa GmbH, a PA6.12 copolyamide stabilised against heat and environmental ageing, modified with anti-impact agents, with a layer thickness of 0.3±0.05mm,
- an inner layer 11 of UBE Nylon 1024JI from UBE Engineering Plastics, a PA6 polyamide, plasticised and modified with an anti-impact agent, with a layer thickness of 0.5±0.05mm,
- an intermediate layer 13 of Zytel ST 801 from DuPont, a PA66 polyamide modified with anti-impact agents, with a layer thickness of 0.2±0.05mm.

The melting points of the materials used in the examples are as follows: 173±3 °C for PA12, 198±3 °C for PA6.12 and 219±3 °C for PA6. However, the most important parameter is not this, but the standard collapse temperature. Said standard temperature is established in the following conditions: a portion of pipe measuring at least 300mm is placed in a climatic test chamber, applying a pressure inside the pipe of -0.999 relative bar. The temperature of the chamber is maintained for at least an hour and the temperature increment is at most 5 °C every hour, said increment being reduced to 3 °C in the vicinity of the collapse temperature. The test is complete when the pipe collapses.

For the 8mm diameter pipes with a thickness of 1 mm in the examples in Figs. 1, 2 and 3, the standard collapse temperature was at least 200±3°C, for the two-layer pipe with an inner layer of 0.7mm and an outer layer of 0.3mm it was >180°C±3 °C, for the three-layer pipe with an inner layer of 0.75mm it was 195 °C±3°C and for the four-layer pipe it was 185 °C±3 °C. The standard collapse temperature of the three-layer pipe in Fig. 4 was 183 ± 3 °C. This indicates an improvement of as much as 30°C over known pipes made of PA12 and PA612 of the prior art. In addition, the collapse temperature of the three- and four-layer pipes can be increased by increasing the thickness of the PA6 layer to about 0.7mm. In particular, the same test carried out on pipes of a known type with the same dimensions as the example produced the following results: 165-170±3 °C for a PA12 pipe and 175±3°C for a PA6.12 pipe.

For the pipes in the earlier examples, the tests required by the standards of various car manufacturers were also carried out with satisfactory results. All the pipes complied with the functional and ageing resistance characteristics described in the technical standards R52655 (2010) "Brake Booster Lines: Material Requirements" and R82065 "Brake Booster Vacuum Line A SSY Clinched Connections".

## Claims

1. Pipe comprising at least two concentric layers, **characterised in that** the outermost or first layer is made of PA612 or a composition containing PA612 and a second layer is made of PA6, PA66, copolymer PA6/66 or a composition containing said compound.

2. Pipe according to claim 1, **characterised in that** said first and second layers are immediately adjacent.

3. Pipe according to either claim 1 or claim 2, **characterised in that** the second layer is made of PA6 or a composition containing said compound.

4. Pipe according to claim 3, **characterised in that** the first layer is made of PA612 and the second layer is made of PA6.

5. Pipe according to any one of claims 1 to 4, **characterised in that** it is a two-layer pipe, the second layer being the innermost layer of the pipe.

6. Pipe according to claim 5, **characterised in that** the first layer has a thickness of between 20 % and 40 % of the thickness of the pipe and the second layer has a thickness of between 60 % and 80 % of the total thickness of the pipe.

7. Pipe according to any one of claims 1 to 4, **characterised in that** an intermediate layer is situated between the first and second layer.

8. Pipe according to claim 7, **characterised in that** the intermediate layer is made of PA66 or a composition containing PA66.

9. Pipe according to claim 8, **characterised in that** the intermediate layer is made of PA66.

10. Pipe according to any one of claims 2 to 4, **characterised in that** it comprises a third layer immediately adjacent to the second layer made of PA612.

11. Pipe according to claim 10, **characterised in that** it is a three-layer pipe, the third layer being the innermost layer of the pipe.

12. Pipe according to claim 11, **characterised in that** the first layer has a thickness of between 20 % and 40 % of the total thickness of the pipe, the second layer has a thickness of between 40 % and 60 % of said total thickness, and the third layer has a thickness of between 15 % and 25 % of said thickness.

13. Pipe according to claim 10, **characterised in that** it comprises a fourth layer immediately adjacent to the third layer made of PA12.

14. Pipe according to claim 13, **characterised in that** it is a four-layer pipe, the fourth layer being the innermost layer of the pipe.

15. Pipe according to claim 14, **characterised in that** the first layer has a thickness of between 15 % and 35 % of the total thickness of the pipe, the second layer has a thickness of between 40 % and 60 % of said total thickness, the third layer has a thickness of between 10 % and 20 % of said total thickness and the fourth layer has a thickness of between 10 % and 20 % of said total thickness.

16. Pipe according to any one of claims 1 to 15, **characterised in that** the thickness of the second layer is at least 0.40mm.

17. Pipe according to claim 16, **characterised in that** the thickness of the second layer is between 0.75±0.05mm and 0.45±0.05mm.

18. Pipe according to either claim 16 or claim 17, **characterised in that** the thickness of the second layer is at least 0.65mm.

19. Pipe according to any one of claims 1 to 18, **characterised in that** the total thickness of the tube is at least 1 mm.

20. Pipe according to any one of claims 1 to 19, **characterised in that** there is no adhesive between its layers.

21. Use of a pipe according to any one of claims 1 to 20 in a brake booster vacuum line.

22. Use of a pipe according to any one of claims 7 to 20 in a line for the transport of combustion gases.

23. Use of a pipe according to any one of claims 1 to 20 for a vehicle fuel transport line.
